# EUROPEAN PATENT SPECIFICATION

(11) **EP 3 819 602 B1**
(45) Date of publication and mention of the grant of the patent: **14.02.2024**
(21) Application number: 19857682.9
(22) Date of filing: 23.08.2019
(51) Int. Cl.: G01F 3/18, B67D 7/18, B67D 7/74, G01F 1/00, G01F 3/16, F04B 7/00, F04B 9/113, F04B 13/02, G01F 11/02, G01F 15/00

(54) **POSITIVE DISPLACEMENT FLOWMETER**
VERDRÄNGUNGSDURCHFLUSSMESSER
DÉBITMÈTRE VOLUMÉTRIQUE

(30) Priority: 07.09.2018 JP 2018167502; 06.11.2018 JP 2018208547
(43) Date of publication of application: 12.05.2021
(73) Proprietor: Tatsuno Corporation, Tokyo 108-0073 (JP)
(72) Inventor: KOIKE, Tsuyoshi, Tokyo 108-0073 (JP); TAKESHIMA, Ayumi, Tokyo 108-0073 (JP)
(74) Representative: Isarpatent
(86) International application number: PCT/JP2019/033097
(87) International publication number: WO 2020/050064

(56) References cited:
- EP-A2- 2 829 850
- JP-A- H11 301 797
- JP-A- H11 301 797
- JP-A- 2012 103 011
- US-A- 2 465 997
- US-A- 5 094 106

## Description

### TECHNICAL FIELD

The present invention relates to a volumetric flow meter, and more particularly to a two piston type volumetric flow meter used for mixing additives into fuel and so on.

### BACKGROUND ART

Generally, as traveling distance of a vehicle increases, an engine thereof looses power due to accumulated carbon and frictional resistance. In order to recover the loosed power, additives are mixed into fuel. Then, the present applicant proposed a device for mixing additives into fuel in Patent Document 1. Patent Document 2 describes a flowmeter having pistons disposed in cylinder chambers. Piston rods connecting the pistons are engaged by a crank shaft. A slide valve is constructed to be rotated by the crank shaft. The pressure of a fuel oil flowing through an inlet and a channel into a cylinder chamber causes the pistons to move. The moving of the piston rod allows the crank shaft to rotate causing the slide valve to change the opening side. Patent Document 3 describes a metering device comprising a body having an inlet and an outlet. A valve is configured to switch between two ports that are connected to a chamber. Pistons that are connected by a rod are placed in each tip of the chamber. An outlet port of the valve is connected to the outlet.

### PRIOR ART DOCUMENTS

### PATENT DOCUMENTS

Patent Document 1: Japanese Patent Publication No. Heisei 4-327198 gazette, Patent Document 2: EP 2 829 850 A2, Patent Document 3: JP H11 301797 A.
EP 2 829 850 A2 describes a flowmeter comprising pistons disposed in cylinder chambers. Piston rods connecting the pistons are engaged by a crank shaft. A slide valve is constructed to be rotated by the crank shaft. The pressure of a fuel oil flowing through an inlet and a channel into a cylinder chamber causes the pistons to move. The moving of the piston rod allows the crank shaft to rotate, causing the slide valve to change the opening side. HP H11 301797 A describes a metering device comprising a body having an inlet and an outlet. A valve is configured to switch between two ports that are connected to a chamber. Pistons that are connected by a rod are placed in each tip of the chamber. An outlet port of the valve is connected to the outlet.

### OUTLINE OF THE INVENTION

### PROBLEMS TO BE SOLVED BY THE INVENTION

The invention described in the Patent Document 1 is effective. As a flowmeter weighing additives for the above device is used a two piston type volumetric flow meter for rotating an input shaft by a motor, and switching whether an additive enters to a cylinder chamber (weighing chamber) or is discharged therefrom by a switching valve mounted on the input shaft.

However, since amount of the additive weighed by the volumetric flow meter is very small, it is not easy to force out airs staying in the cylinder chamber and a passage to an exit (outflow port of switching valve) when the volumetric flow meter is installed. Particularly, when an additive with high viscosity is used, air reservoirs generate therein. Since the air reservoir causes error in discharge amount of additive to deteriorate weighing accuracy, it is considered that the passage is reduced in size to increase flow speed and perform bubble removing.

But, the small-sized passage increases pressure loss, so that the additive cannot be discharged without high pump pressure. In addition, there is a possibility the high pump pressure deteriorates durability of devices such as oil seal and pistons.

Then, the present invention has been made in consideration of the above problems in the conventional technique, and the object of the present invention is to provide a volumetric flow meter capable of easily performing bubble removing without high pump pressure.

### MEANS OF SOLVING THE PROBLEMS

In order to attain the above object, a volumetric flow meter of the present invention is provided according to claim 1.

With the volumetric flow meter according to the present invention, the convex parts formed on the inner surfaces of the piston covers or portions of the main body opposing to the inner surfaces of the piston covers disturb fluid flow between the cylinder chambers and the passages to prevent generation of air reservoirs. In addition, even if air reservoirs generate, airs are agitated by the convex parts to be discharged easily. With this, bubble removing can be performed with ease without high pump pressure.

In the volumetric flow meter, each convex part can be mounted near an upper portion of each cylinder chamber. Since each convex part disturbs fluid flow in an area where air reservoirs generate, it becomes hard that the air reservoirs generate, and even if the air reservoirs generate, airs are easily discharged.

In the volumetric flow meter, a plurality of convex parts can be mounted in each of the passages to improve bubble removing efficiency, which is effective for liquid with high viscosity.

### EFFECTS OF THE INVENTION

As described above, with the present invention, it is possible to perform bubble removing with ease without high pump pressure.

### BRIEF DESCRIPTION OF THE DRAWINGS

[Figure 1] A schematic view showing a fueling apparatus having a volumetric flow meter according to the present invention.
[Figure 2] A perspective view showing the volumetric flow meter and a motor shown in Fig. 1.
[Figure 3] A-A line sectional view of the volumetric flow meter shown in Fig. 2.
[Figure 4] A perspective view showing a condition that a piston cover of the volumetric flow meter shown in Fig. 2 is detached.
[Figure 5] A schematic view (a figure viewed from the arrow B in Fig. 3) showing an inner surface and a passage near the inner surface of the piston cover of the volumetric flow meter shown in Fig. 2.
[Figure 6] A schematic view (corresponding to the figure viewed from the arrow B in Fig. 3) of an air reservoir generated in a passage of the volumetric flow meter shown in Fig. 2.
[Figure 7] A schematic view showing another example of convex parts formed on the inner surface of the piston cover of the volumetric flow meter shown in Fig. 2.
[Figure 8] A schematic view showing another example of convex parts formed on the inner surface of the piston cover of the volumetric flow meter shown in Fig. 2.
[Figure 9] A schematic view showing another example of the convex part formed on the inner surface of the piston cover of the volumetric flow meter shown in Fig. 2.
[Figure 10] A schematic view showing another example of the convex parts formed on the inner surface of the piston cover of the volumetric flow meter shown in Fig. 2.
[Figure 11] A schematic view showing another example of the convex part formed on the inner surface of the piston cover of the volumetric flow meter shown in Fig. 2.
[Figure 12] A schematic view showing an example of the convex part formed on a main body opposing to the inner surface of the piston cover of the volumetric flow meter shown in Fig. 2.

### MODE FOR CARRYING OUT THE INVENTION

Next, embodiments of the present invention will be explained with reference to the drawings in detail.

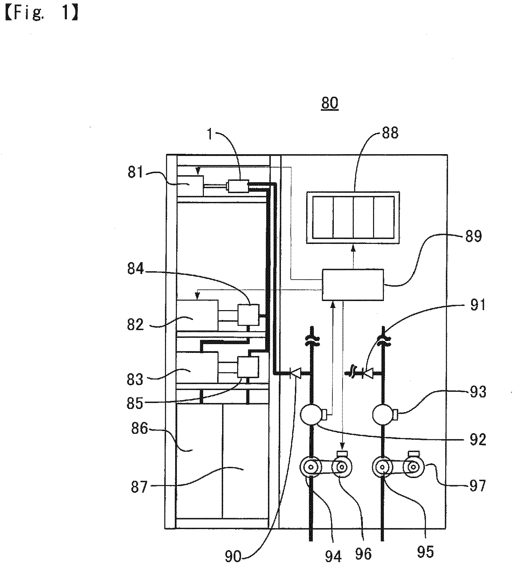

Figure 1 shows a fueling apparatus including a volumetric flow meter according to the present invention, and the fueling apparatus 80 includes two systems for feeding fuel such as gasoline having fuel pumps 94, 95 for drawing fuel from an underground tank (not shown) or the like, fuel motors 96, 97 for rotationally driving the fuel pumps 94, 95, and fuel flow meters 92, 93 for weighing amount of fuel fed to a vehicle or the like.

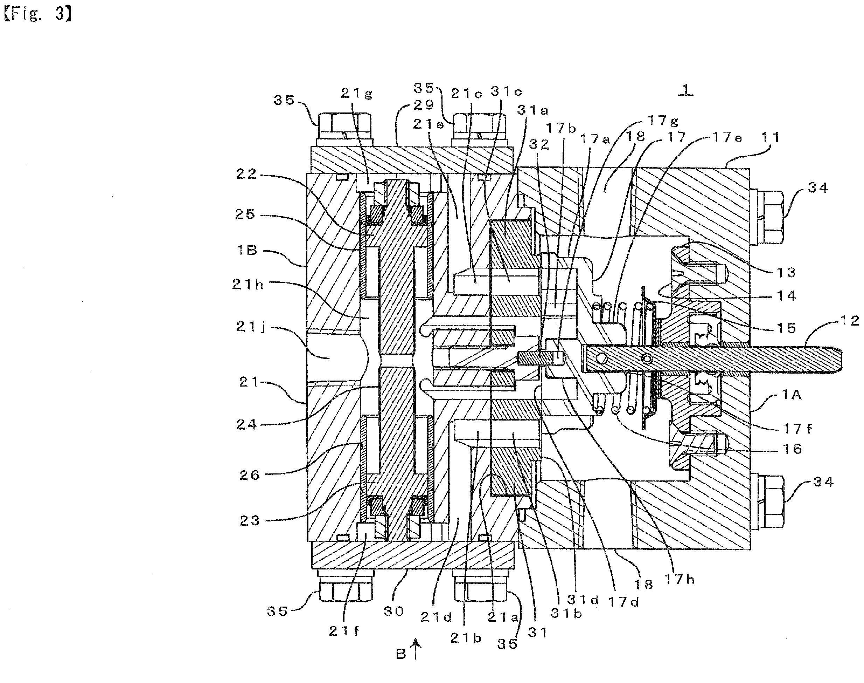

In addition, the fueling apparatus 80 includes two systems for mixing additives into fuel having additive vessels 86, 87, additive pumps 82, 83 for separately drawing additives from the additive vessels 86, 87, additive motors 84, 85 for rotationally driving the additive pumps 82, 83 respectively, an additive flow meter (volumetric flow meter according to the present invention) 1 for separately weighing additives fed from the additive pumps 82, 83, the second additive motor 81 for rotating a rotation axis 12 (refer to Fig. 3) of the additive flow meter 1, and the systems can add two kinds of additives.

Further, the fueling apparatus 80 includes check valves 90, 91 for feeding additives weighed by the additive flow meter 1 to the fuel feeding systems, a fueling controller 89 for controlling a whole fueling apparatus 80, and a display 88 for displaying fueling amount and the like.

With the above construction, a fuel into which the additives are mixed is fed to a vehicle by the fuel feeding systems while mixing the additives from the additive feeding systems into the fuel at a predetermined ratio.

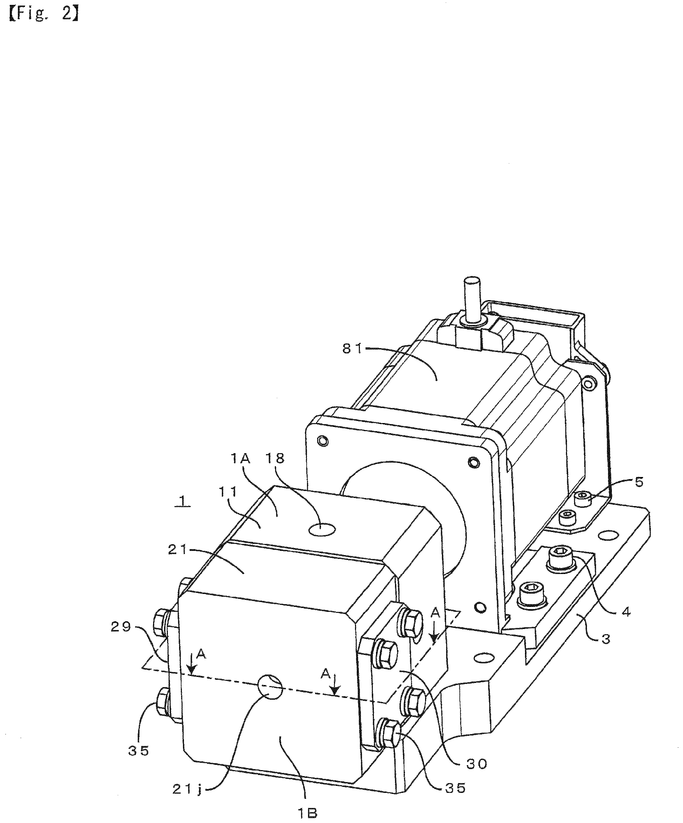

Figure 2 shows the additive flow meter 1 and the second additive motor 81, and they are fixed on a common base 3 by fastening members such as bolts 4, 5. The additive flow meter 1 is composed of a passage switching mechanism 1A and a weighing mechanism 1B.

As shown in Fig. 3, the passage switching mechanism 1A includes the rotation axis 12 penetrating a housing 11 and connected to the second additive motor 81 (refer to Fig. 2), a supporting part 13 fixed on the inner surface of the housing 11 by screws 14, the supporting part 13 being penetrated by the rotation axis 12, a dish shaped part 15 fixed on the left surface of the supporting part 13, a switching valve 17 fixed to the left end part of the rotation axis 12, the switching valve 17 rotating together with the rotation axis 12, a coil spring 16 arranged between the switching valve 17 and the dish shaped part 15, and two inflow ports 18 penetrating the housing 11.

The weighing mechanism 1B is, in the main body 21, provided with a piston rod 24 including pistons 22, 23 at both ends, cylinders 25, 26 for accommodating the pistons 22, 23 respectively, piston covers 29, 30 opposing to cylinder chambers 21g, 21f respectively, and a valve seat 31 contacting the switching valve 17 of the passage switching mechanism 1A.

The switching valve 17 is provided with a projecting part 17e rightwardly projecting from the right side surface of the main body17a, a concave part 17b leftwardly opening, and a projecting part 17h leftwardly projecting. Capacity of the upper portion of the concave part 17b is larger than that of the lower portion thereof in Fig. 3, the upper portion communicates with a passage 31c of the valve seat 31, and the lower portion does not communicate with a passage 31b. Into a hole part 17f rightwardly opening from the projecting part 17e is inserted the left end part of the rotation axis 12. With a hole part 17g of the projecting part 17h is movably engaged a pin 32 fixed on the weighing mechanism 1B side. With the construction, while a whole switching valve 17 is energized on the valve seat 31 side by the coil spring 16, the switching valve 17 rotates around the pin 32 by rotation of the rotation axis 12, and the left side surface 17d of the switching valve 17 slides on the right side surface 31d of the valve seat 31.

The valve seat 31 is formed in a disk shape, and is accommodated in a concave part 21a formed on the right side of the main body 21 of the weighing mechanism 1B. Two passages 31b, 31c penetrate the main body 31a of the valve seat 31.

The main body 21 of the weighing mechanism 1B is provided with a through hole 21h penetrating the main body 21 in a vertical direction, and passages 21b-21e, 21j. The passages 21b, 21c communicate with the passages 31b, 31c of the valve seat 31 respectively. The passages 21d, 21e continuing the passages 21b, 21c respectively communicate with cylinder chambers 21f, 21g of the upper and lower end portions of the through hole 21h. The passage 21j communicates through the through hole 21h and passages (not shown) formed in the main body 21 and the valve seat 31 with the concave part 17b.

The housing 11 of the passage switching mechanism 1A and the main body 21 of the weighing mechanism 1B are integrated by the bolts 34. In addition, on the upper and lower end surfaces of the main body 21 are fixed the piston covers 29, 30 respectively by the bolts 35.

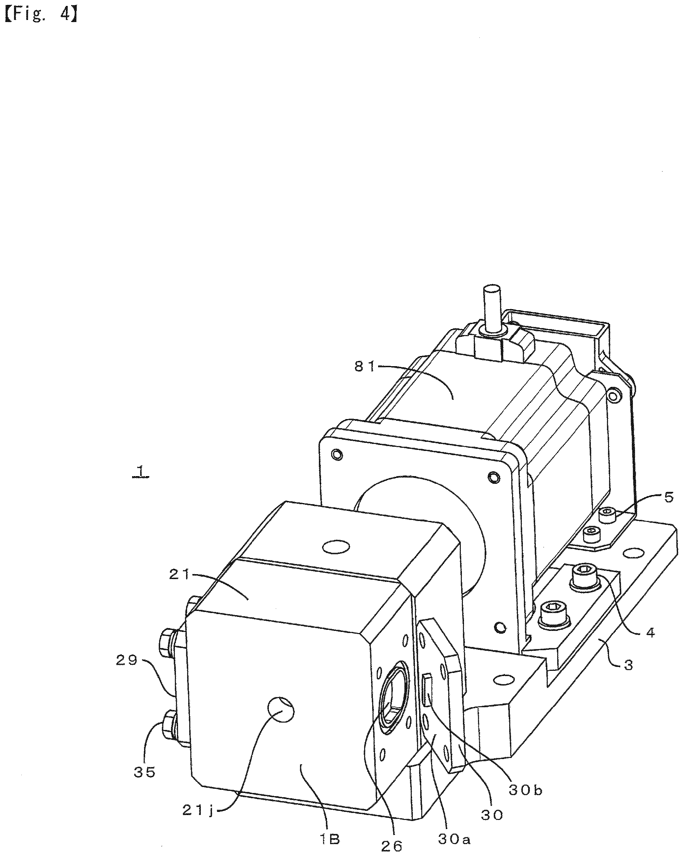

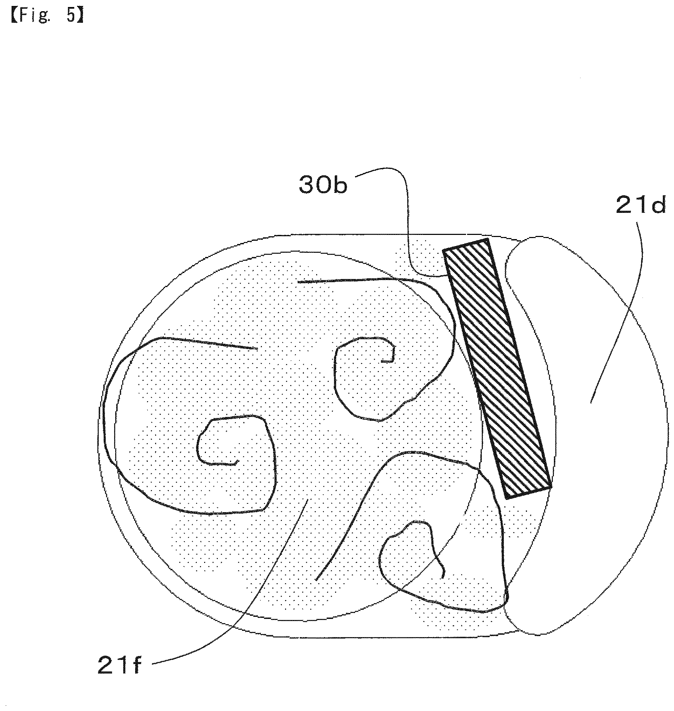

As shown in Fig. 4, on the inner surface 30a of the piston cover 30 is formed a convex part 30b with a cubic shape. Although illustration is omitted, the same convex part is formed on the inner surface of another piston cover 29. The convex part 30b locates, as shown in Fig. 5, between the passage 21d and the cylinder chamber 21f, and near the upper portion of the cylinder chamber 21f.

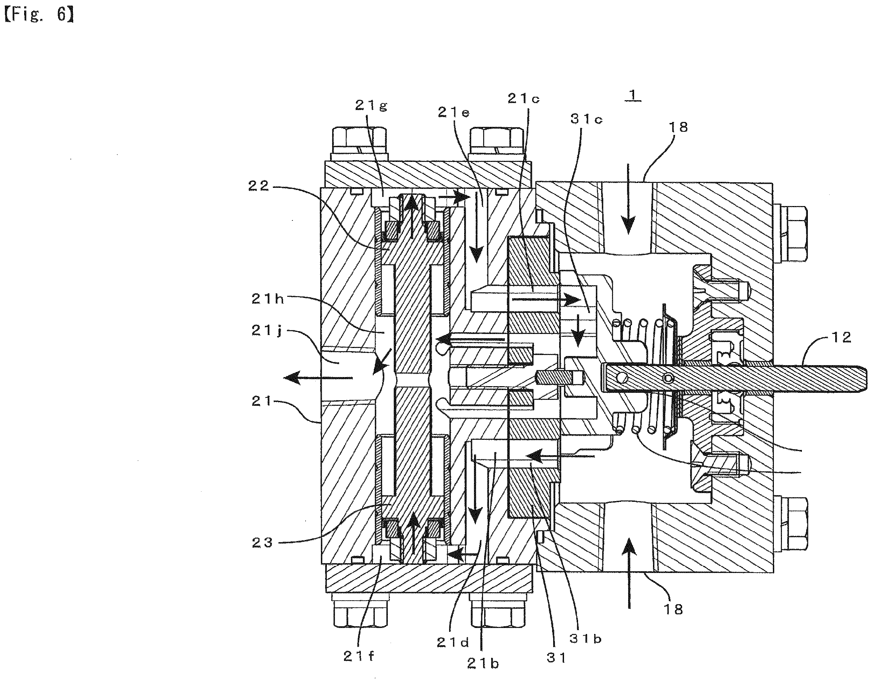

Next, a motion of the additive flow meter 1 with the above construction will be explained with reference to Fig. 6. In the figure, additive flow and moving directions of the pistons 22, 23 are shown by allows.

Additives entering from the inflow ports 18 reach the cylinder chamber 21f through the passage 31b of the valve seat 31 and the passages 21b, 21d of the main body 21 to move a piston 23 upward. With the upward movement of the piston 23, the piston 22 also moves upward, and an additive filling the cylinder chamber 21g reaches the through hole 21h through the passages 21e, 21c of the main body 21, the passage 31c of the valve seat 31 and passages (not shown) formed in the main body 21 and the valve seat 31, and the additive is finally fed from the passage 21j to the filling system of the fueling apparatus 80 shown in Fig. 1. After that, the second additive motor 81 rotates the rotation axis 12 by 180° to rotate the switching valve 17 by 180° also, the passages 21c, 21e become inflow passages, the passages 21d, 21b and the passage 31b become outflow passages, and flows opposing to the above are formed. In addition, although additives do not fill the cylinder chambers 21f, 21g when operation of the additive flow meter 1 starts, additives fill the cylinder chambers 21f, 21g when the rotation axis 12 rotates one time, the above motion is alternately repeated in accordance with the rotation of the rotation axis 12, and additives are continuously fed to the filling system of the fueling apparatus 80 at a predetermined ratio.

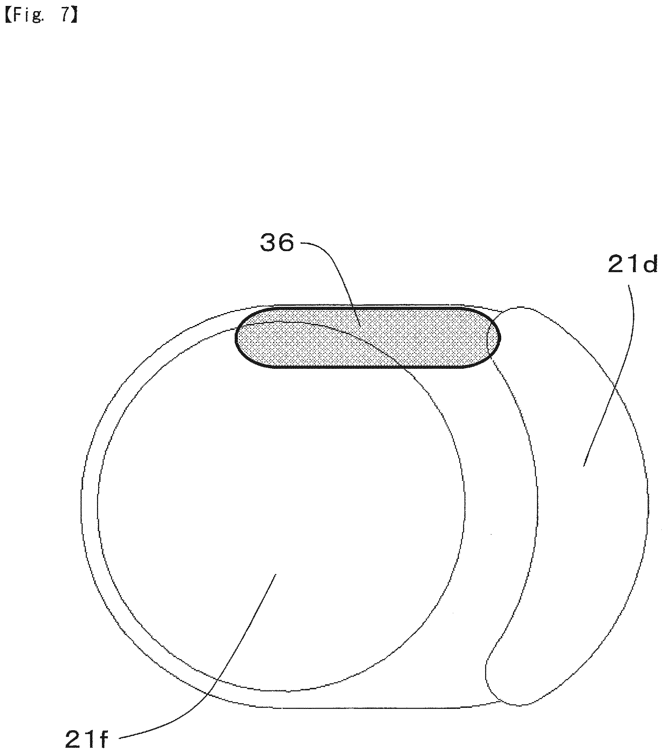

However, in the conventional volumetric flow meter when it is installed in the fueling apparatus 80, as shown in Fig. 7, it is not easy to discharge an air 36 staying from the upper portion of the cylinder chamber 21f to the upper portion of the passage 21d to the concave part 17b of the switching valve 17 because amount of additive weighed by the volumetric flow meter 1 is very small.

Therefore, in the present invention, as shown in Fig. 5, in the passage 21d and the cylinder chamber 21f, the convex part 30b is formed on a portion near the upper portion of the cylinder chamber 21f where the air 36 is likely to stay, the convex part 30b disturbs fluid flow between the passage 21d and the cylinder chamber 21f, and generation of air reservoir is prevented. In addition, even if air stays at the portion, the air is agitated by the convex part 30b to be discharged easily.

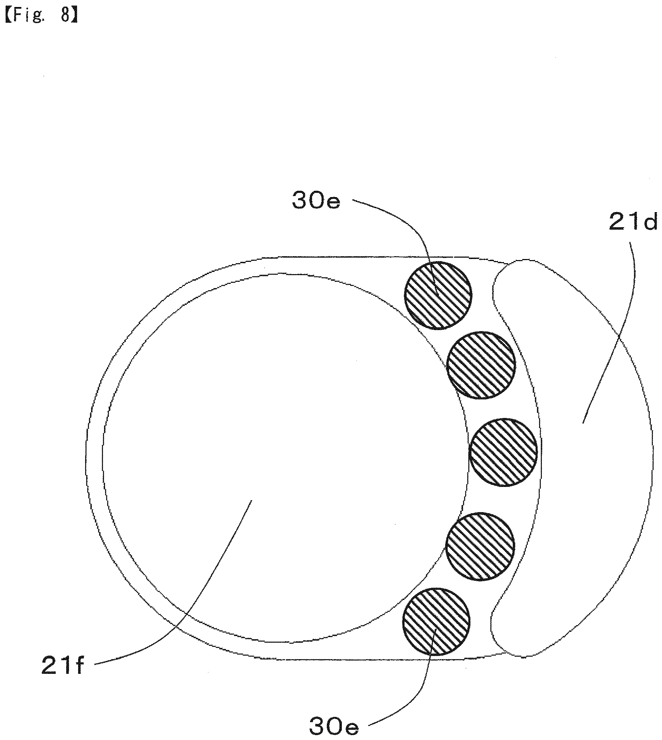

Figure 8 shows an example that a plurality of convex part 30e with a columnar shape is mounted on the passage 21d and the cylinder chamber 21f instead of the convex parts 30b. Mounting the convex parts 30e improve bubble removing efficiency, and is effective for an additive with high viscosity.

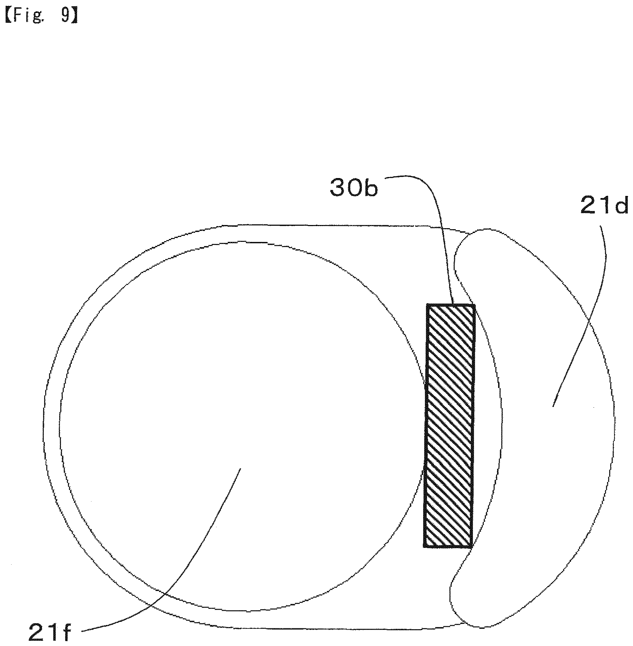

Figure 9 shows an example that the convex part 30b is mounted on a central portion in a vertical direction of the passage 21d and the cylinder chamber 21f. With the example, position of the convex part 30b can be determined with ease.

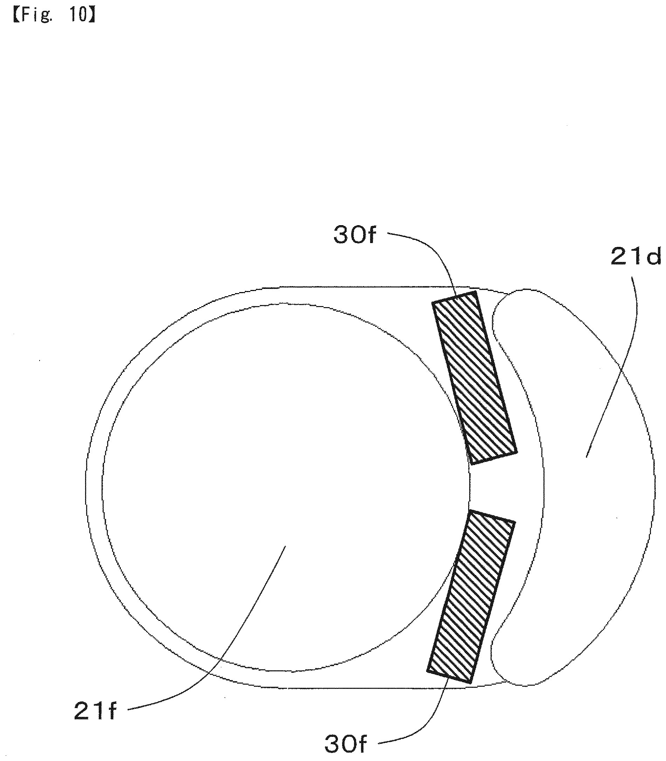

Figure 10 shows an example that two convex parts 30f with slightly smaller shapes than the convex part 30b are separately mounted on upper and lower portions between the passage 21d and the cylinder chamber 21f. In the example, mounting posture of the volumetric flow meter 1 is not limited.

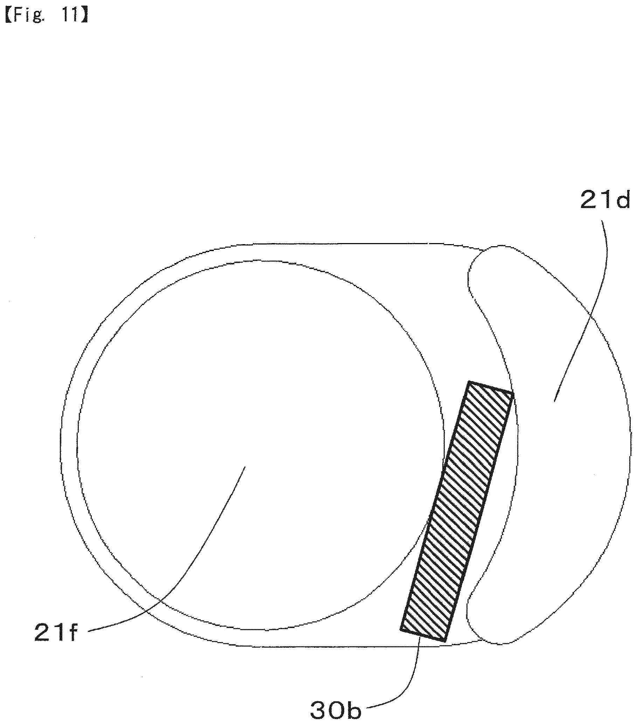

Figure 11 shows an example that the convex part 30b is mounted from a central portion to a lower portion in a vertical direction between the passage 21d and the cylinder chamber 21f. In the example, while realizing a bubble removing function to a certain extent, it is effective also when the volumetric flow meter 1 is mounted upside down in a vertical direction.

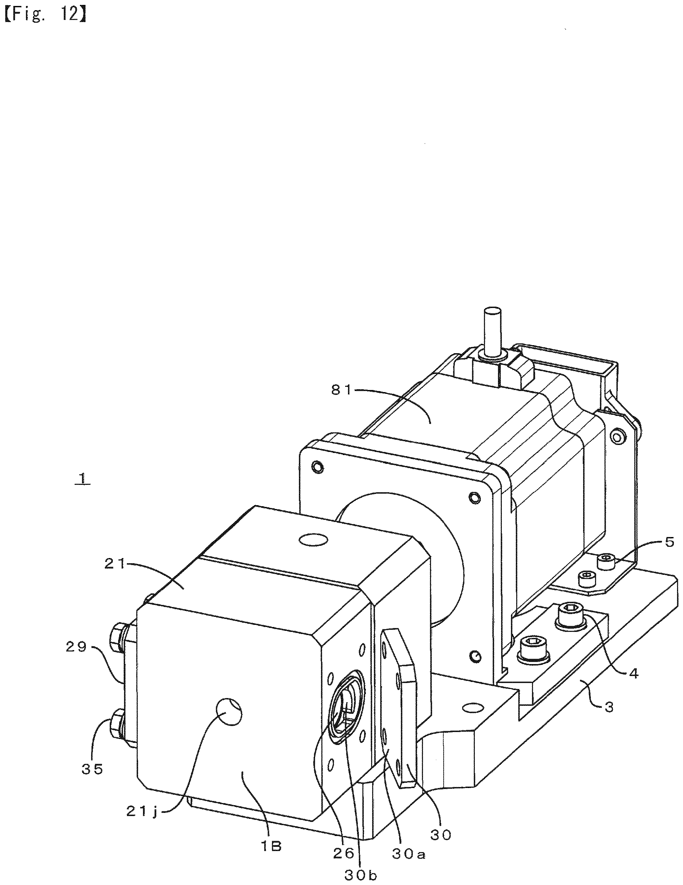

Figure 12 shows a case that the convex part 30b is mounted on the main body 21 side opposing to the inner surface of the piston cover 30. The convex part 30b locates, as shown in Fig. 5, between the passage 21d and the cylinder chamber 21f, and near the upper portion of the cylinder chamber 21f. Although illustration is omitted, the same convex part is formed on the main body 21 side opposing to the inner surface of another piston cover 29. In addition, on the main body 21 side also can be mounted various convex parts shown in Figs. 8 to 11.

When the convex parts 30b and the like are mounted on the inner surfaces of a pair of the left and right piston covers 29, 30 and do not have the same shape, there is a possibility that they are incorrectly mounted in the left and right directions, but mounting them on the main body 21 side eliminates the possibility. In addition, the convex parts 30b and the like are not mounted on the piston covers 29, 30, so that the piston covers 29, 30 can be made common. Further, when the convex parts 30b and the like are mounted on the piston covers 29, 30, there is a possibility that their positions are shifted due to dimensional errors and loosenesses of bolts, but mounting them on the main body 21 side eliminates the possibility.

### DESCRIPTION OF THE REFERENCE NUMERALS

1 volumetric flow meter
1A passage switching mechanism
1B weighing mechanism
3 base
4, 5 bolts
11 housing
12 rotation axis
13 supporting part
14 screw
15 dish shaped part
16 coil spring
17 switching valve
18 inflow port
21 main body
22, 23 pistons
24 piston rod
25, 26 cylinders
29, 30 piston covers
31 valve seat
32 pin
34, 35 bolts
36 air
80 fueling apparatus

## Claims

1. A volumetric flow meter (1) comprising:
a piston rod (24) including pistons (22, 23) at both ends;
cylinders (25, 26) for accommodating the pistons (22, 23) mounted on both ends of the piston rod (24);
cylinder chambers (21f, 21g) drilled on a main body (21), the cylinder chambers (21f, 21g) separately accommodating the cylinders (25, 26);
passages (21d, 21e) separately opening near cylinder chambers (21f, 21g) outside the cylinders (25, 26) to separately communicate with both cylinder chambers (21f, 21g), and being alternately switched to an inflow passage and an outflow passage by a switching valve (17); and
piston covers (29, 30) separately opposing to the cylinder chambers (21f, 21g) and the passages (21d, 21e),
**characterized in that** one or more convex parts (30b, 30e, 30f) are formed on the inner surface of each of the piston covers (29, 30) or on the portions of the main body (1) opposing to the inner surfaces of the piston covers in order to disturb fluid flow between the cylinder chambers and the passages to prevent generation of air reservoirs, whereby the one or more convex parts (30b, 30e, 30f) are located between each passage (21d, 21e) and corresponding cylinder chamber (21f, 21g).

## Patentansprüche

1. Volumendurchflussmesser (1), umfassend:
eine Kolbenstange (24), die an beiden Enden Kolben (22, 23) aufweist;
Zylinder (25, 26) zum Aufnehmen der Kolben (22, 23), die an beiden Enden der Kolbenstange (24) montiert sind;
Zylinderkammern (21f, 21g), die in einen Hauptkorpus (21) gebohrt sind, wobei die Zylinderkammern (21f, 21g) die Zylinder (25, 26) separat aufnehmen;
Durchgänge (21d, 21e), die separat in der Nähe der Zylinderkammern (21f, 21g) außerhalb der Zylinder (25, 26) öffnen, um separat mit beiden Zylinderkammern (21f, 21g) zu kommunizieren, und von einem Schaltventil (17) abwechselnd zu einem Zuflussdurchgang und einem Abflussdurchgang geschaltet werden; und
Kolbenabdeckungen (29, 30), die den Zylinderkammern (21f, 21g) und den Durchgängen (21d, 21e) separat gegenüberliegen,
**dadurch gekennzeichnet, dass** ein oder mehrere konvexe Teile (30b, 30e, 30f) an der Innenfläche jeder der Kolbenabdeckungen (29, 30) oder an den Abschnitten des Hauptkorpus (1), die den Innenflächen der Kolbenabdeckungen gegenüberliegen, ausgebildet sind, um die Fluidströmung zwischen den Zylinderkammern und den Durchgängen zu stören, um die Bildung von Lufttaschen zu verhindern, wobei der eine oder die mehreren konvexen Teile (30b, 30e, 30f) zwischen jedem Durchgang (21d, 21e) und der entsprechenden Zylinderkammer (21f, 21g) angeordnet sind.

## Revendications

1. Débitmètre volumétrique (1) comprenant :
une tige de piston (24) comportant des pistons (22, 23) aux deux extrémités ;
des cylindres (25, 26) pour recevoir les pistons (22, 23) montés aux deux extrémités de la tige de piston (24) ;
des chambres de cylindre (21f, 21g) percées sur un corps principal (21), les chambres de cylindre (21f, 21g) recevant séparément les cylindres (25, 26) ;
des passages (21d, 21e) s'ouvrant séparément à proximité des chambres de cylindre (21f, 21g) à l'extérieur des cylindres (25, 26) pour communiquer séparément avec les deux chambres de cylindre (21f, 21g), et étant alternativement commutés vers un passage d'entrée et un passage de sortie par une soupape de commutation (17) ; et
des couvercles de piston (29, 30) opposés séparément aux chambres de cylindre (21f, 21g) et aux passages (21d, 21e),
**caractérisé en ce qu'**une ou plusieurs parties convexes (30b, 30e, 30f) sont formées sur la surface interne de chacun des couvercles de piston (29, 30) ou sur les parties du corps principal (1) opposées aux surfaces internes des couvercles de piston afin de perturber l'écoulement de fluide entre les chambres de cylindre et les passages pour empêcher la génération de réservoirs d'air, moyennant quoi la ou les parties convexes (30b, 30e, 30f) sont situées entre chaque passage (21d, 21e) et chambre de cylindre correspondante (21f, 21g).
